# EUROPEAN PATENT SPECIFICATION

(11) **EP 1 533 942 B1**
(45) Date of publication and mention of the grant of the patent: **05.09.2007**
(21) Application number: 04025605.9
(22) Date of filing: 28.10.2004
(51) Int. Cl.: H04L 12/26, H04L 29/08, H04L 12/24

(54) **Dynamic system for communicating network monitoring system data to nodes outside of the management system**
Dynamisches System zur Übertragung von Netzwerküberwachungsdaten an Knoten ausserhalb des Management Systems
Système dynamique pour transfert de données de surveillance d'un réseau aux noeuds en dehors du système de gestion

(30) Priority: 21.11.2003 US 719191
(43) Date of publication of application: 25.05.2005
(73) Proprietor: Alcatel Lucent, 75008 Paris (FR)
(72) Inventor: Kan, Chao, 75035 Frisco TX (US); Skoog, Frederick H., 76034 Colleyville Texas (US); Audu, Alexander, 75044 Garland Texas (US)
(74) Representative: Schmidt, Werner Karl

(56) References cited:
- WO-A2-03/003210
- K.C.NORSETH: "Architecture Model for IP Flow Information Export" INTERNET DRAFT, June 2002 (2002-06), pages 1-21, XP015002090
- HUNT R: "SNMP, SNMPv2 and CMIP -- the technologies for multivendor network management" COMPUTER COMMUNICATIONS, ELSEVIER SCIENCE PUBLISHERS BV, AMSTERDAM, NL, vol. 20, no. 2, March 1997 (1997-03), pages 73-88, XP004064129 ISSN: 0140-3664
- THOMAS CHEN, LUCIA HU: "Internet Perfomrance Monitoring" PROCEEDINGS OF THE IEEE, August 2002 (2002-08), pages 1-13, XP002316110

## Description

### BACKGROUND OF THE INVENTION

The present embodiments relate to computer networks and are more particularly directed to a dynamic system for communicating network monitoring system data to destinations outside of the management system.

As the number of users and traffic volume continue to grow on the global Internet and other networks, an essential need has arisen to have a set of mechanisms to monitor network activity. The use of the monitored activity may depend on the entity that seeks the network information. For example, operators or end-users may find interest in router activity, where various router applications such as Quality of Service ("QoS"), traffic engineering, security, accounting and billing require more timely and sophisticated traffic measurements to provide more insight into the router as well as the network. As another example, network managers, such as those located at the carrier or service provider level in a network hierarchy may desire or indeed require access to such information and possibly other network performance or traffic information as well.

With the above needs, presently the view into network activity is generally limited through the network management system ("NMS") or comparable technology. As known in the art, an NMS is a defined hierarchy, as may be consistent with the known telecommunications management network ("TMN") architecture. The TMN architecture is a reference model for a hierarchical telecommunications management approach, and it includes a management system. The management system typically includes the NMS at an upper level, below which are several element management system ("EMS") nodes, where each EMS node manages one or more routers. Typically, the EMS node collects information about and manages the functions within each managed router. While the EMS has a perception of the several routers that it manages, it often reports network information upward to the NMS, which thereby has knowledge of multiple EMSs, presenting the NMS with a perception of the overall network. The hierarchy of communicating network information as just described may extend to lower levels of a network, that is, an NMS/EMS model may be established at an enterprise facility or the like, such as in a business intranet. Such a local control manager may include an EMS function without a separate NMS function, but is still considered a management system due to its oversight and control of a router. In all events, these models have in common that a router includes certain mechanisms to collect network statistics and to report them along the network to a management system. For example, the router is often said to include an agent, and when the agent detects an event such as network congestion, then it sends, as part of the router, a trap to an EMS/NMS manager or it otherwise reports the network statistics, and in any event the communications from the router to the EMS/NMS system use a dedicated application level protocol that may be proprietary or one of various standard protocols, with contemporary examples including the Simple Network Management Protocol ("SNMP"), the Common Management Information Protocol ("CMIP"), and the Common Object Request Broker Architecture ("CORBA") protocol. In any event, the management system may then monitor, respond, and control the managed router(s) in response to the reported network information. The control typically includes the known FCAPS areas of management, that is, the five areas of fault, configuration, accounting, performance, and security.

Given the above-described hierarchy, access to the various router-reported network information is limited to the management system. Thus, if an end user device ("EUD"), or its operator, outside of the management system requires access to such information, such access is provided in an informal manner and is not by way of communications along the actual network. For example, an EUD may represent an operator of an intranet that is connected to the global Internet, where that operator desires information that reflects issues surrounding operation of its intranet insofar as it is networked with the Internet. In this and comparable endeavors, the operator is likely left to making a telephone inquiry to the entity (e.g., carrier, service provider) that oversees the management system (e.g., EMS/NMS), and if responsive the entity must then sort through the raw data of its EMS/NMS databases in an effort to respond to the inquiry. Additionally, by time a response is formulated, hours or even days may pass and, thus, the condition that caused the inquiry may have changed. This process, therefore, includes steps that are not automated, may consume considerable time and human resources, and may produce results that are unreliable and/or stale by time they are received. As such, it may be less than satisfactory for the inquiring entity, particularly if the inquiry is made with respect to a time critical matter.

The IPFIX Working Group Internet Draft "Architecture Model for IP Flow Information Export", June 2002, edited by K.C. Norseth, discloses a router for exporting IP flow information in a network without a management system.

The tutorial "SNMP, SNMPv2 and CMIP - the technologies for multivendor network management" by Ray Hunt in COMPUTER COMMUNICATIONS vol. 20, March 1997, ELSEVIER SIENCE PUBLISHERS BV, teaches technologies for network management. The tutorial describes and compares the management protocols Simple Network Management Protocol (SNMP & SNMPv2) and Common Management information Protocol (CMIP).

"Internet Performance Monitoring" by Thomas M. Chen and Lucia Hu, PROCEEDINGS OF IEEE, August 2002, describes techniques for internet performance monitoring. The document describes single router based passive measurements as used by management protocols. The document also describes active measurements involving several routers.

In view of the above, there arises various needs for network management system data to be more readily accessible to entities outside the management system entity, such as EUDs operated by end-users or local operators using the network. These EUDs may well desire to monitor and probe the status and operations of various components of the network and to have insight to traffic statistics such as at router interfaces and accumulated over periodic intervals for a quick snapshot into network activity. For example, the EUD may desire to evaluate the level of compliance of its Internet Service Providers ("ISPs") with a Service Level Agreement ("SLAs") between the ISP and the EUD. As another example, the internet is evolving towards an advanced architecture that seeks to guarantee the quality of service ("QoS") for real-time applications, such as by putting limits on the upper bound on certain QoS parameters including jitter, throughput, one-way packet delay, and packet loss ratio. Accordingly, the EUD may desire to track QoS performance. Given the preceding, the preferred embodiments are directed to providing an EUD that is outside of the management system with access in a more automated and timely manner to such types of information, as described below.

### BRIEF SUMMARY OF THE INVENTION

The present invention describes a router for routing packets between network nodes of a computer network according to a communication protocol. The router is manageable by an external management system according to a network management system protocol which differs from the communication protocol. The router comprises at least one monitoring circuit coupled to the network. The at least one monitoring circuit is operable to examine packets communicated to the router, to provide information associated with selected ones of the examined packets and to report to the management system using the network management system protocol. The router further comprises a circuitry which is controllable by the management system. The circuitry is operable for processing the provided information, for including the processed information into one or more packets and for transmitting the one or more packets along the network to at least one network node using the communication protocol.

Preferred embodiments are described and claimed hereinafter.

### BRIEF DESCRIPTION OF THE SEVERAL VIEWS OF THE DRAWING

Figure 1 illustrates a network system according to a preferred embodiment.

Figure 2 illustrates a functional block diagram of selected functions in a router and that router may be implemented as any of the routers of Figure 1.

### DETAILED DESCRIPTION OF THE INVENTION

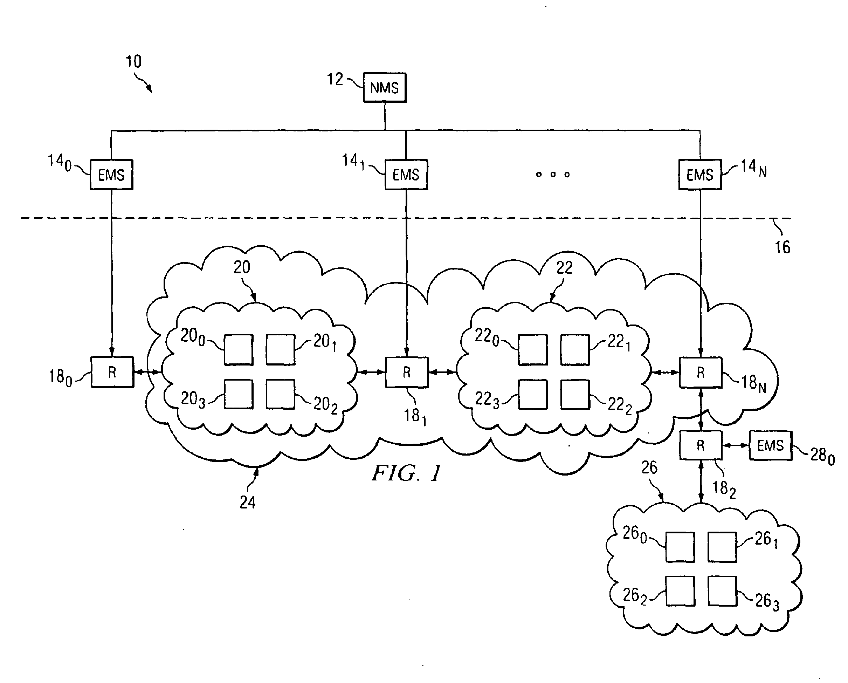

By way of illustration of one preferred inventive implementation, Figure 1 depicts a network system designated generally at 10. Network system 10 presents a hierarchy along with various devices known in the art; however, the preferred embodiments include additional functionality, as detailed later, to further improve that system with respect to reporting network information to end user devices ("EUDs") that are outside of the management system. Thus, the following discussion first examines portions of system 10 as known in the art and facilitates a later discussion of the improvements to that system consistent with the present inventive scope. Further, for sake of simplicity system 10 eliminates certain aspects and also provides only one example of various possible types of connected configurations, where one skilled in the art will appreciate the additional aspects as well as other possible configurations.

Looking first to system 10 in general and as known, it provides a hierarchy with a network management system ("NMS") node 12 along the top of the hierarchy. The NMS system is used as an example of a common network management system, while the descriptions of inventive aspects in this document are intended to be applicable to other management systems and such systems are ascertainable by one skilled in the art. NMS node 12 is connected to communicate with a number *N*+1 of element management system ("EMS") nodes 14₀, 14₁, through 14*_{N}*. The communication between NMS node 12 and each EMS node 14ₓ is considered at a level that is shown above a dotted line 16, where communications above that line are typically thought to be network management communications and are according to a network management protocol. Thus, communications between NMS node 12 and each EMS node 14*ₓ* may be by way of various dedicated network management protocols that differ from the form typically used for communications below line 16, where as introduced above in the Background Of The Invention section of this document such network management protocols may include, as examples, SNMP, CMIP, and CORBA.

In the example of Figure 1 and now looking at the connectivity through and below line 16, each EMS node 14*ₓ* is bi-directionally connected to a corresponding router. For sake of reference, therefore, EMS node 14₀ is connected to a router 18₀, EMS node 14₁ is connected to a router 18₁, and EMS node 14*_{N}* is connected to a router 18*_{N}*; however, such one-to-one correspondence is not required and indeed is often not the case, that is, a single EMS node often supports multiple routers although such is neither shown nor described so as to simplify the remaining discussion. Coupled between routers 18₀ and 18₁ is a first group of EUDs, shown as EUD 20₀, 20₁, 20₂, and 20₃, where generally this first group is designated as group 20. Each EUD in group 20 may represent one of various different types of devices such as end-user stations or other processing devices and is bi-directionally connected to communicate network packets to one another. Further, each EUD in group 20 is accessible by routers 18₀ and 18₁, for purposes of routing packet traffic among the EUDs and also for reporting network information upward in the hierarchy sense of system 10 above line 16, that is, through an EMS node 14*ₓ* to NMS node 12. In this manner, therefore, various attributes of each managed router 18*ₓ* may be altered, or "managed," so as to affect, and typically to improve, network performance. Also due to this available router control, the EMS nodes are considered a part of the management system. Continuing with Figure 1, a second group 22 of EUDs 22₀, 22₁, 22₂, and 22₃ is shown connected between router 18₁ and router 18*_{N}*. Similar to group 20, each EUD in group 22 may communicate packet traffic with one another while network statistics relating to that traffic may be reported from those devices to the respective EMS nodes using the network management protocol. Having introduced groups 20 and 22 and the router interconnectivity between them, note also that collectively all of these nodes form a larger group indicated at 24; such a group, therefore, may represent a larger user traffic network, that is, a greater level of interconnectivity along which users may communicate packets from one node to another. Thus, group 24 may represent a portion of the user level of the global Internet.

Completing Figure 1, also by way of example and to facilitate an additional discussion later, router 18*_{N}* is also shown as bi-directionally connected to a router 18₂. Router 18₂ is connected to a group 26 of EUDs, including EUDs 26₀, 26₁, 26₂, and 26₃. Group 26 may represent an enterprise or other local network or the like, typically referred to as an intranet at a facility or some other location. Due to the connection between routers 18*_{N}* and 18₂, then any EUD in group 26 may communicate with any EUD in groups 20 and 24. Further, while router 18₂ is not shown connected to an EMS above line 16, as an alternative it is shown as connected to an EMS node 28₀. In this manner, EMS node 28₀ is intended to depict a management system that is local to group 26, that is, it receives network information from router 18₂ and is able to control router 18₂ in response to that information. However, EMS node 28₀ is not a part of the EMS/NMS system above line 16, and does not report network statistics to NMS node 12. Further, a person with access to the network information database in EMS node 28₀ is therefore able to monitor and report such network information locally, as may be desired by a network expert, technician, or the like that is managing or overseeing the intranet that is formed by group 26. Once again, this communication of network management information between router 18₂ and EMS node 28₀ is by way of the network management protocol (e.g., SNMP, CORBA, CMIP).

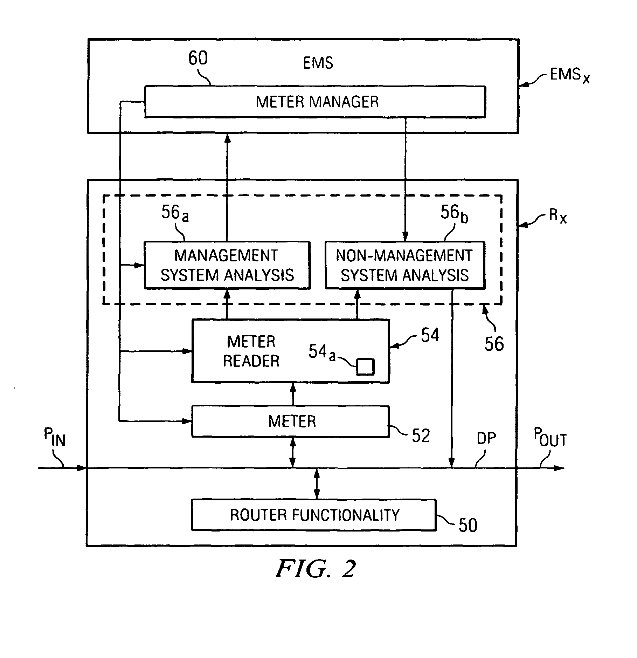

Figure 2 illustrates a functional block diagram of selected functions in a router R*ₓ*, which may be implemented in any of the routers 18*ₓ* in Figure 1, where one skilled in the art should appreciate that router R*ₓ* also will include numerous other functions that are known to routers but are not illustrated so as to simplify the illustration and present discussion. As discussed above, each of those routers communicates with an EMS node, so for sake of example router R*ₓ* in Figure 2 is shown generally as connected to an EMS node EMS*ₓ*. Thus, router R*ₓ* may be associated with the EMS nodes above line 16 such as for routers 18₀, 18₁, and 18₂, or alternatively router R*ₓ* may be associated with EMS node 28₀ that is part of an enterprise or other local network management system below line 16. Still further, note that in either event in some instances the functionality of an EMS node may be combined in part with that of an NMS node and, thus, in some depictions such a node may be identified as an EMS/NMS node. In any event, note that router R*ₓ* may be constructed by one skilled in the art using various forms of hardware and software, where the selection is a matter of implementation choice in order to achieve the functionality described in this document.

Looking now to router R*ₓ* in Figure 2, it includes a packet input PIN along which network packets are received and a packet output P_{OUT} along which network packets are transmitted, where both input and output are logical depictions of what in hardware may be represented in the form of multiple ports or the like. Router R*ₓ* is also shown to include a router functionality block 50, which is intended to represent known functionality associated with a router for sake of routing packets according to various considerations and, as such, block 50 is shown bi-directionally connected to a data path DP between input PIN and output P_{OUT} to depict a logical ability to control the flow of packets through router R*ₓ*.

Router R*ₓ* also includes three blocks that have been implemented in prior routers for purposes of providing network management information to a management system, namely, a meter 52, a meter reader 54, and a management system analysis block 56a; however, in the preferred embodiment these three functions are implemented in combination with a novel non-management system analysis block 56b so as to provide an overall improved system as is explored in the remainder of this document.

Looking first to the functional blocks within router R*ₓ* that are known in connection with providing network management information to a management system, data path DP is connected to a meter 52, which is intended to illustrate a function of sampling each packet as it passes through router R*ₓ*. In other words, meter 52 physically probes the underlying network traffic in router R*ₓ* and each time meter 52 detects a packet at the router, it determines whether the packet satisfies one or more rules in a "rule set" described below. Accordingly, during real-time passage of numerous packets by meter 52, and for each such packet that satisfies a rule(s), then meter 52 provides information relating to the packet. The provided information may be a portion of actual data in each such packet or information relating to the packet, as further discussed later. Further in this regard, in a preferred embodiment, meter 52 operates to perform a real time metering scheme, where such a scheme is performed by way of example by a Real-Time Traffic Flow Measurement ("RTFM") meter which is a concept from the Internet Engineering Task Force ("IETF"). As known in the RTFM art, RTFM meters are previously known to be used in systems for determining the service requested by IP packets that are passing through a network for purposes of collecting revenue, where such a service is identifiable by the transport port number specified in each IP packet. For example, RTFM meters are currently being considered for use in systems whereby an internet user is charged based on the service he or she is using on the internet; for example, a different fee may be charged to the user for each different internet service, including mail, video, phone calls, and web browsing. In the preferred embodiment, however, meter 52 is more flexible in that it responds to the rule sets as introduced above and further described below.

The information provided by meter 52 is read by meter reader 54 and put into a format sufficient for communication upwardly in the sense of the management system hierarchy. Toward this end, meter reader 54 preferably includes a flow store 54a, which represents a storage medium that stores a flow database with the information from, or about, packets that are provided by meter 52; thus, by way of example, flow store 54a may be structured in a format of what is known in the art as a Management Information Base ("MIB"). In the preferred embodiment, the information stored in flow store 54a is from meter 52, which provides this information in response to what is referred to in this document and was introduced above as a "rule set" (or "rule sets" when plural). The rule set(s) is initially provided to meter 52 from a meter manager 60 in EMS node EMS*ₓ*, that is, manager 60 is responsible for configuring and controlling one or more meters 52. Note also that meter manager 60 is also responsible for configuring and controlling one or more meter readers 54 so that preferably a meter reader 54 is informed of at least the following for every meter 52 it is collecting information from: (i) the meter's unique identity (i.e., its network name or address; (ii) how often information is to be collected from the meter; (iii) which flow records are to be collected (e.g. all flows, flows for a particular rule set, flows which have been active since a given time, etc.); and (iv) which attributes are to be collected for the required flow records (e.g. all attributes, or a small subset of them). Thus, in response to packet monitoring, flow store 54a stores information relating to packets that are observed by meter 52 as those packets proceed along data path DP. For example, flow store 54a may store portions of actual packet data (e.g., packet header or a portion of that header) as well as other packet traffic statistics, such as packet time of arrival data, port arrival data, number of discarded packets, error packets, port utilization, buffer utilization, etc.

The information in flow store 54a of meter reader 54 is available to a management system analysis block 56a. Block 56a represents any type of analysis that is desired by a management system and that may be performed on packet information collected by meter 52 and read by meter reader 54. Toward this end, meter manager 60 may select management system analysis block 56a for application to the information in flow store 54a, where that analysis then provides a report back to EMS node EMS*ₓ*, again according to the management system protocol. For example, such information may be of any of the types known for present EMS/NMS functionality, including by ways of example the known FCAPS areas of management, that is, the five areas of fault, configuration, accounting, performance, and security.

Turning now to an inventive improvement as illustrated in connection with router R*ₓ* in Figure 2, attention is directed to non-management system analysis block 56b. For ease of implementation into existing router architectures, block 56b may be thought of as combinable with block 56a to form an overall network management analysis block 56. In general, block 56b represents the available function of processing information from flow store 54a so as to achieve any of various desirable analyses, where one or more of these analyses are selected under control of meter manager 60. However, unlike block 56a which reports back to EMS node EMS*ₓ*, the analyses of block 56b are directed to destinations other than the management system (i.e., other than to an EMS or NMS node). In other words, and as shown pictorially in Figure 2, in the preferred embodiment, and unlike block 56a which provides information for the EMS/NMS system according to the network management protocol, the output of non-management system analysis block 56b is directed back to data path DP; this output, therefore, may be represented in a format other than the network management protocol. Further, according to the preferred embodiment the results of the analysis of block 56b are preferably included within packets that are communicated to end user nodes just as are other packets passing along data path DP. Thus, network information from flow store 54a may be analyzed by block 56b and then embodied into a network packet or packets, and also in this form such a packet(s) may then be forwarded to any node, or nodes, available along that network which comprehends the form of those packets. Indeed, also in this regard, block 56b preferably includes the analyzed network information into a packet which includes a destination address corresponding to an EUD that has previously requested the analyzed information. In this way, such packets may be delivered to different EUDs, which importantly may include end-users or other operators that desire access to processed network information that previously was reserved for access by an EMS/NMS node and via a specialized network management protocol. Lastly, note also that in some implementations of the preferred embodiment, the results of the analysis of block 56b may be constrained to certain information so as to prohibit certain information, particularly raw network information, from reaching EUDs that are outside of the management system; for example, it may be undesirable to permit the actual packet payload or its header to be exported to such an EUD.

Given the preceding, attention is now returned to Figure 1 so as to further appreciate the operation and benefits of router R*ₓ* of Figure 2. In general, the additional functionality provided by the preferred embodiments permits policy and requirements to be defined by end-users, network operators, or other EUDs outside of the network central manger system (e.g., EMS/NMS), and a dynamic non-management system analysis block 56b then provides those EUDs with packets that carry network statistics information according to the defined policy and requirements. For example with respect to Figure 1, EUD 20₀ of group 20 may define a rule set(s) and accompanying analyses for the sake of monitoring network traffic in router 18₀, where those aspects are provided to a meter manager 60 of EMS node 14₀. Thereafter, EMS node 14₀ configures meter 52 of router 18₀ to monitor packets according to the defined rule set(s), where information from or about packets that satisfy the rule set(s) are stored in a database in the form of flow store 54a of router 18₀. The stored information is processed according to non-management system analysis block 56b, with the results being provided, preferably in a form usable by an end user, to the originally-requesting EUD 20₀. In this manner, therefore, the system is dynamic in that EUD 20₀ receives these packets in a very short amount of time relative to when the monitored network activity occurred, that is, the time consumed between monitoring the packets at meter 52, reading the response by meter reader 54, analyzing the response by block 56b, and reporting the analysis in the form of packets to EUD 20₀ may occur in a matter of a few seconds and desirably less than a few (e.g., five) minutes. Thus, in a near real-time manner the EUD outside of the management system may understand and monitor their traffic flows. Note that the preferred approach also accommodates the existing centralized NMS/EMS approach in that, while the above-described process is occurring with respect to a non-central manger EUD, during that same period management system analysis block 56a of router 18₀ may report network information to EMS node 14₀.

The preferred embodiment is further compatible and operable in connection with a localized EMS node to where it also may receive network information as opposed to an EUD, as also may be appreciated in connection with Figure 1, namely, with reference to group 26. Particularly, the configuration of router R*ₓ* of Figure 2 may be implemented in connection with router 18₂ of Figure 1 so as to achieve this result. For instance, EMS node 28₀ is not part of a management system above line 16, but assume as an example that it desires to have knowledge of certain network traffic statistics in router 18₁, and such certain network traffic statistics are relative to the enterprise network (or intranet) that includes group 26 as well as router 18₂. In this case, the appropriate rule set(s) and desired analysis are provided to EMS node 14₁ and, thus, in the preferred embodiment those aspects are incorporated into a meter manager 60 of EMS node 14₁. In a comparable manner as described above, meter manager 60 informs and controls a meter 52, a meter reader 54, and a non-management system analysis block 56b. Thus, as network traffic passes through router 18₁, its meter 52 monitors that traffic, which is further processed by its meter reader 54 and its non-management system analysis block 56b, consistent with the interests of EMS node 28₀ as indicated in the rule set(s) and analysis it sought. The results are then reported from router 18₁ to EMS node 28₀ through router 18₂ preferably in a form usable by EMS node 28₀, thereby informing EMS node 28₀ of such results in a very short amount of time.

From the above, one skilled in the art should appreciate that the preferred embodiments may be implemented in numerous routers and may provide network statistic analysis to numerous EUDs that are not part of the network management system. In addition, note that the network statistic analyses may differ for different inquiring EUDs. Thus, where a meter manager 60 may cause router R*ₓ* to analyze network statistics for one purpose with respect to one non-management system EUD, that same meter manager may cause the same router R*ₓ* to analyze network statistics for a different purpose with respect to another non-management system EUD. Accordingly, the meter manager 60 associates the real-time network traffic information with specific respective analyses within block 56b, based on different monitoring requirements from the end-customers or other non-management system EUDs.

To further illustrate the inventive scope, various examples of use of the preceding concepts are now explored. These examples are not intended to be exhaustive, but instead are instances of preferred additional functionality that is supported by giving a non-management system EUD the ability to monitor network management information per the preferred embodiment. In a first example, when a network abnormality occurs, non-management system block 56b can process the real-time traffic measurements and report the findings in the newly generated reporting packets to multiple EUDs. In one instance, the reporting packets may have the same destination address as the underlying traffic flows under question. In this way, the end-customers, who have traffic flows involved in the abnormality, will be able to know and understand the network situation. This is especially beneficial to enterprise customers. In a second example, when an abnormality occurs in the application layer, or flows associated with some specific applications are in question, block 56b may analyze these flows and send reporting packets directly to the flow source application server to adjust the operation such as speed and QoS. It also may send the reporting packets to the monitoring and reactive servers for further monitoring and re-configuration purposes. In a third example, for marketing and business purposes, a meter manager 60 may instruct a block 56b to send reporting packets to some kind of "customer profilers" so that operators can partnership with the third parties to market their products. For instance, if the block 56b determines from the monitored packet information that some specific customers often go to some web sites for specific services, such as video applications, then operators or end-users who control the customer profiler can partnership with the video application providers to market and bundle the service to those customers. In a fourth example, for security purposes, a meter manager 60 may instruct a block 56b to analyze some highlighted flows from certain addresses to detect whether there is any security violation or attack, and send the results through reporting packets to either network operators or central governmental security functions.

From the above illustrations and description, one skilled in the art should appreciate that the preferred embodiments provide a dynamic system for communicating network monitoring information to destination EUDs outside of a management system. The embodiments provide numerous benefits over the prior art. As one example of a benefit, as compared to static monitoring and reporting mechanisms, the preferred embodiment dynamically analyzes underlying real-time traffic flow information. As another example of a benefit, the results of the dynamic analysis may based on the policies and requirements from both management system and non-management system nodes and reported to both management system and non-management system nodes. As still another example of a benefit, the preferred embodiments are flexible in that alterations may be made in various aspects, such as the types of analyses in block 56b, the conditions evaluated in underlying traffic flows, and the targeted recipient EUDs of the analyses, where all may be dynamically reconfigured. As still another example, the reporting packets sent to destination EUDs outside the management system are provided in an automated manner, without the need and potential for error that accompanies the required human intervention that is often used in the current state of the art where an end-user is required to telephone a person with access to network information stored in an EMS/NMS system. As another example, the preferred embodiment applies not only to IP networks, but also to any network that is cell or packet based. As still another example of a benefit, prior art MIBs provide single point analysis directed to the traffic flow at the location of the MIB. In contrast, the preferred embodiments may be used whereby a single EUD receives real-time collected packet analysis from multiple routers in the network and they are not constrained to the hardware type or manufacturer of each router. In all events, the preceding as well as other benefits should be appreciated by one skilled in the art.

The following features or combinations of features may also constitute further advantageous embodiments of the described and/or claimed invention:
- The described and/or claimed router, wherein the first set of the one or more packets corresponds to a first type of analysis performed by the circuitry for processing the provided information; and wherein the second set of the one or more packets corresponds to a second type of analysis, different from the first type of analysis, performed by the circuitry for processing the provided information;
- The described and/or claimed router, wherein the at least one monitoring circuit is operable to examine packets in response to a set of criteria; and wherein the selected ones of the examined packets correspond to packets that satisfy the set of criteria;
- The described and/or claimed router, wherein the network comprises the global Internet;
- The described and/or claimed router, wherein the network is selected from a group consisting of a cell-based network and a packet-based network;
- The described and/or claimed router, wherein the provided information comprises information copied from the examined packets;
- The described and/or claimed router, wherein the provided information comprises information not included in the.examined packets;
- The described and/or claimed router, wherein the provided information is selected from the set consisting of packet time of arrival data, port arrival data, number of discarded packets, error packets, port utilization, and buffer utilization;
- The described and/or claimed router, further comprising a plurality of routers, and wherein each router in the plurality of routers is for coupling into the computer network, and wherein each router of the plurality of routers comprises: at least one monitoring circuit coupled to the network, wherein the at least one monitoring circuit is operable to examine packets communicated to the router and to provide information associated with selected ones of the examined packets; circuitry for processing the provided information; circuitry for including the processed information into one or more packets; and circuitry for transmitting the one or more packets of a respective router along the network to at least one node coupled to the network, wherein the at least one node is outside of the management system;
- The described and/or claimed router', wherein at least two of the routers in the plurality of routers are operable to include respective processed information into a respective set of one or more packets for transmission to a same destination node;
- The described and/or claimed router, wherein the same destination node is outside of the management system.

As a final benefit, while the present embodiments have been described in detail, various substitutions, modifications or alterations could be made to the descriptions set forth above without departing from the inventive scope which is defined by the following claims.

## Claims

1. A router (Rₓ, 18ₓ) operable to route packets between a plurality of network nodes (20ₓ, 22ₓ) of a computer network according to a communication protocol,
- wherein the router (Rₓ, 18ₓ) is manageable by an external management system (12, 14ₓ) according to a network management system protocol which differs from the communication protocol and
- wherein the router (Rₓ, 18ₓ) comprises at least one monitoring circuit (52, 54, 56a) coupled to the network, wherein the at least one monitoring circuit (52, 54, 56a) is operable to
- examine packets communicated to the router (Rₓ, 18ₓ),
- provide information associated with selected ones of the examined packets and
- report to the management system (12, 14ₓ) using the network management system protocol;
**characterised by** further comprising
- circuitry (56b) for processing the provided information, including the processed information into one or more packets and transmitting the one or more packets along the network (24) to at least one of the plurality of network nodes (20ₓ, 22ₓ) using the communication protocol,
- wherein said circuitry (56b) is controllable by the management system (12, 14ₓ) using the network management system protocol.

2. The router (Rₓ, 18ₓ) of claim 1, wherein
the processed information is constrained to certain information through the control applied by the management system (12, 14ₓ).

3. The router (Rₓ, 18ₓ) of claim 1 or 2,
- wherein the at least one monitoring circuit (52, 54, 56a) is operable to store the provided information in a flow store (54a) comprised in the router (Rₓ, 18ₓ); and
- wherein the circuitry (56b) is operable to access the information stored in the flow store (54a).

4. The router (Rₓ, 18ₓ) according to any of the preceding claims :
wherein the management system (12, 14ₓ) comprises a plurality of nodes (14₀ ... 14_{N}) operable to communicate according to the network management system protocol.

5. The router (Rₓ, 18ₓ) of claim 4 wherein the network management system protocol is one from a group consisting of a Simple Network Management Protocol, a Common Management Information Protocol, and a Common Object Request Broker Architecture protocol.

6. The router (Rₓ, 18ₓ) of claim 4 or 5 wherein the management system comprises a network management system (12) and an element management system (14ₓ).

7. The router (Rₓ, 18ₓ) according to any of the preceding claims
- wherein a set of transmitted one or more packets correspond to a set of packets communicated to the router (Rₓ, 18ₓ) and
- wherein the circuitry (56b) is for transmitting the one or more packets within 60 seconds of when the router (Rₓ, 18ₓ) receives the set of packets communicated to the router (Rₓ, 18ₓ).

8. The router (Rₓ, 18ₓ) according to any of the preceding claims 1-6,
- wherein a set of transmitted one or more packets correspond to a set of packets communicated to the router (Rₓ, 18ₓ) and
- wherein the circuitry (56b) is for transmitting the one or more packets within five minutes of when the router (Rₓ, 18ₓ) receives the set of packets communicated to the router (Rₓ, 18ₓ).

9. The router (Rₓ, 18ₓ) according to any of the preceding claims,
wherein the circuitry for transmitting is further adapted for transmitting the one or more packets along the network (24) to the plurality of network nodes (20ₓ, 22ₓ).

10. The router (Rₓ, 18ₓ) according to any of the preceding claims,
- wherein the circuitry (56b) is for transmitting a first set of the one or more packets along the network (24) using the communication protocol to a first respective network node (20ₓ, 22ₓ) coupled to the network (24) and
- wherein the circuitry (56b) is for transmitting a second set of the one or more packets along the network (24) using the communication protocol to a second respective network node (20ₓ, 22ₓ) coupled to the network (24).

11. A method of operating a router (Rₓ, 18ₓ) for routing packets, between a plurality of network nodes (20ₓ, 22ₓ) of a computer network according to a communication protocol, the method comprising the steps of
- examining packets communicated to the router (Rₓ, 18ₓ),
- providing information associated with selected ones of the examined packets and
- reporting to an external management system (12, 14ₓ) using a network management system protocol which differs from the communication protocol;
**characterised** further by
- processing the provided information according control information received from the management system using the network management system protocol and
- including the processed information into one or more packets and transmitting the one or more packets along the network (24) to at least one of the plurality of network nodes (20ₓ, 22ₓ) using the communications protocol.

## Patentansprüche

1. Router (Rₓ, 18ₓ), der so betrieben werden kann, dass er Pakete zwischen einer Vielzahl von Netzwerkknoten (20ₓ, 22ₓ) eines Computernetzwerks gemäß einem Kommunikationsprotokoll weiterleitet,
- wobei der Router (Rₓ, 18ₓ) von einem externen Managementsystem (12, 14ₓ) gemäß einem Netzwerkmanagement-Systemprotokoll verwaltet werden kann, das sich von dem Kommunikationsprotokoll unterscheidet und
- wobei der Router (Rₓ, 18ₓ) mindestens eine mit dem Netzwerk gekoppelte Überwachungsschaltung (52, 54, 56a) umfasst, wobei die mindestens eine Überwachungsschaltung (52, 54, 56a) so betrieben werden kann, dass sie
- Pakete untersucht, die an den Router (Rₓ, 18ₓ) kommuniziert wurden,
- Informationen zu den ausgewählten der untersuchten Pakete liefert und
- mithilfe des Netzwerkmanagement-Systemprotokolls Ergebnisse an das Managementsystem (12, 14ₓ) meldet;
**dadurch gekennzeichnet, dass** der Router des Weiteren Folgendes umfasst:
- Schaltung (56b) zur Verarbeitung der bereitgestellten Informationen, zum Einbinden der verarbeiteten Informationen in ein oder mehrere Pakete und zum Senden dieser ein oder mehreren Pakete entlang des Netzwerks (24) an mindestens eine Vielzahl von Netzwerkknoten (20ₓ, 22ₓ) mithilfe des Kommunikationsprotokolls,
- wobei diese Schaltung (56b) vom Managementsystem (12, 14ₓ) mithilfe des Netzwerkmanagement-Systemprotokolls gesteuert werden kann.

2. Router (Rₓ, 18ₓ) gemäß Anspruch 1, wobei die verarbeiteten Informationen durch die vom Managementsystem (12, 14ₓ) angewandte Steuerung auf bestimmte Informationen begrenzt sind.

3. Router (Rₓ, 18ₓ) gemäß Anspruch 1 oder 2,
- wobei die mindestens eine Überwachungsschaltung (52, 54, 56a) so betrieben werden kann, dass sie die bereitgestellten Informationen in einem im Router (Rₓ, 18ₓ) enthaltenen Flussspeicher (54a) speichert; und
- wobei die Schaltung (56b) so betrieben werden kann, dass sie die im Flussspeicher (54a) gespeicherten Informationen aufruft.

4. Router (Rₓ, 18ₓ) gemäß einem der vorstehenden Ansprüche, wobei das Managementsystem (12, 14ₓ) eine Vielzahl von Knoten (14₀ ... 14_{N}) umfasst, die so betrieben werden können, dass sie gemäß dem Netzwerkmanagement-Systemprotokoll kommunizieren.

5. Router (Rₓ, 18ₓ) gemäß Anspruch 4, wobei das Netzwerkmanagementsystem-Protokoll eines aus einer Gruppe ist, die ein Simple Network Management Protocol, ein Common Management Information Protocol und ein Common Object Request Broker Architecture Protocol umfasst.

6. Router (Rₓ, 18ₓ) gemäß Anspruch 4 oder 5, wobei das Managementsystem ein Netzwerkmanagementsystem (12) und ein Elementmanagementsystem (14ₓ) umfasst.

7. Router (Rₓ, 18ₓ) gemäß einem der vorstehenden Ansprüche,
- wobei ein Set aus einem oder mehreren gesendeten Paketen einem Set von Paketen entspricht, die an den Router (Rₓ, 18ₓ) gesendet wurden, und
- wobei die Schaltung (56b) zum Senden des einen oder mehrerer Pakete innerhalb von 60 Sekunden nach dem Empfang der an den Router (Rₓ, 18ₓ) kommunizierten Pakete durch den Router (Rₓ, 18ₓ) verwendet wird.

8. Router (Rₓ, 18ₓ) gemäß einem der vorstehenden Ansprüche 1-6,
- wobei ein Set aus gesendeten ein oder mehreren Paketen einem an den Router (Rₓ, 18ₓ) gesendeten Set aus Paketen entspricht, und
- wobei die Schaltung (56b) zum Senden des einen oder mehrerer Pakete innerhalb von 5 Minuten nach dem Empfang der an den Router (Rₓ, 18ₓ) kommunizierten Pakete durch den Router (Rₓ, 18ₓ) verwendet wird.

9. Router (Rₓ, 18ₓ) gemäß einem der vorstehenden Ansprüche,
- wobei die Schaltung zum Senden des Weiteren zum Senden der oder mehreren Pakete entlang des Netzwerks (24) an die Vielzahl von Netzwerkknoten (20ₓ, 22ₓ) angepasst ist.

10. Router (Rₓ, 18ₓ) gemäß einem der vorstehenden Ansprüche,
- wobei die Schaltung (56b) zum Senden eines ersten Sets des einen oder mehrerer Pakete entlang des Netzwerks (24) mithilfe des Kommunikationsprotokolls an einen ersten entsprechenden mit dem Netzwerk (24) gekoppelten Netzwerkknoten (20ₓ, 22ₓ) verwendet wird, und
- wobei die Schaltung (56b) zum Senden eines zweiten Sets des einen oder mehrerer Pakete entlang des Netzwerks (24) mithilfe des Kommunikationsprotokolls an einen zweiten entsprechenden mit dem Netzwerk (24) gekoppelten Netzwerkknoten (20ₓ, 22ₓ) verwendet wird.

11. Verfahren zum Betrieb eines Routers (Rₓ, 18ₓ) zum Weiterleiten von Paketen zwischen einer Vielzahl von Netzwerkknoten (20ₓ, 22ₓ) eines Computernetzwerks gemäß einem Kommunikationsprotokoll, wobei das Verfahren die folgenden Schritte umfasst:
- Untersuchen der an den Router (Rₓ, 18ₓ) kommunizierten Pakete,
- Bereitstellen von Informationen zu ausgewählten der untersuchten Pakete und
- Melden von Ergebnissen an ein externes Managementsystem (12, 14ₓ) mithilfe eines Netzwerkmanagementsystem-Protokolls, das sich vom Kommunikationsprotokoll unterscheidet;
**gekennzeichnet durch** folgende Schritte:
- Verarbeitung der bereitgestellten Informationen gemäß der vom Managementsystem empfangenen Steuerinformationen mithilfe des Netzwerkmanagementsystem-Protokolls, und
- Einbinden der verarbeiteten Informationen in ein oder mehrere Pakete und Senden des einen oder mehrerer Pakete entlang des Netzwerks (24) an mindestens einen aus einer Vielzahl von Netzwerkknoten (20ₓ, 22ₓ) mithilfe des Kommunikationsprotokolls.

## Revendications

1. Routeur (Rₓ, 18ₓ) pouvant être utilisé pour acheminer des paquets entre une pluralité de noeuds de réseau (20ₓ, 22ₓ) d'un réseau informatique conformément à un protocole de communication,
- le routeur (Rₓ, 18ₓ) pouvant être géré par un système de gestion externe (12, 14ₓ) conformément à un protocole de système de gestion de réseau qui est différent du protocole de communication et
- le routeur (Rₓ, 18ₓ) comprenant au moins un circuit de surveillance (52, 54, 56a) connecté au réseau, l'au moins un circuit de surveillance (52, 54, 56a) pouvant être utilisé pour
- examiner les paquets communiqués au routeur (Rₓ, 18ₓ),
- fournir des informations associées avec ceux sélectionnés parmi les paquets examinés et
- rendre compte au système de gestion (12, 14ₓ) en utilisant le protocole de système de gestion de réseau,
**caractérisé en ce qu'**il comprend en plus
- un circuit (56b) pour traiter les informations fournies, inclure les informations traitées dans un ou plusieurs paquets et transmettre le ou les plusieurs paquets sur le réseau (24) à au moins l'un de la pluralité de noeuds de réseau (20ₓ, 22ₓ) en utilisant le protocole de communication,
- ledit circuit (56b) pouvant être commandé par le système de gestion (12, 14ₓ) en utilisant le protocole du système de gestion.

2. Routeur (Rₓ, 18ₓ) selon la revendication 1, les informations traitées étant limitées à certaines informations par le biais de la commande appliquée par le système de gestion (12, 14ₓ).

3. Routeur (Rₓ, 18ₓ) selon la revendication 1 ou 2,
- l'au moins un circuit de surveillance (52, 54, 56a) pouvant être utilisé pour stocker les informations fournies dans un magasin à flux (54a) compris dans le routeur (Rₓ, 18ₓ) ; et
- le circuit (56b) pouvant être utilisé pour accéder aux informations stockées dans le magasin à flux (54a).

4. Routeur (Rₓ, 18ₓ) selon l'une quelconque des revendications précédentes, le système de gestion (12, 14ₓ) comprenant une pluralité de noeuds (14₀ ... 14_{N}) pouvant être utilisés pour communiquer conformément au protocole du système de gestion de réseau.

5. Routeur (Rₓ, 18ₓ) selon la revendication 4, le protocole du système de gestion de réseau faisant partie d'un groupe composé du protocole de gestion de réseau unique, du protocole commun d'informations de gestion et d'un protocole d'architecture commune de négociateur de requête d'objet.

6. Routeur (Rₓ, 18ₓ) selon la revendication 4 ou 5, le système de gestion comprenant un système de gestion de réseau (12) et un système de gestion d'élément (14ₓ).

7. Routeur (Rₓ, 18ₓ) selon l'une quelconque des revendications précédentes,
- un ensemble d'un ou de plusieurs paquets transmis correspondant à un ensemble de paquets communiqué au routeur (Rₓ, 18ₓ) et
- le circuit (56b) étant destiné à transmettre le ou les plusieurs paquets dans les 60 secondes partir du moment où le routeur (Rₓ, 18ₓ) a reçu l'ensemble de paquets communiqué au routeur (Rₓ, 18ₓ).

8. Routeur (Rₓ, 18ₓ) selon l'une quelconque des revendications précédentes,
- un ensemble d'un ou de plusieurs paquets transmis correspondant à un ensemble de paquets communiqué au routeur (Rₓ, 18ₓ) et
- le circuit (56b) étant destiné à transmettre le ou les plusieurs paquets dans les 5 minutes à partir du moment où le routeur (Rₓ, 18ₓ) a reçu l'ensemble de paquets communiqué au routeur (Rₓ, 18ₓ).

9. Routeur (Rₓ, 18ₓ) selon l'une quelconque des revendications précédentes,
- le circuit de transmission étant en plus conçu pour transmettre le ou les plusieurs paquets sur le réseau (24) vers la pluralité de noeuds de réseau (20ₓ, 22ₓ).

10. Routeur (Rₓ, 18ₓ) selon l'une quelconque des revendications précédentes,
- le circuit (56b) étant destiné à transmettre un premier ensemble d'un ou plusieurs paquets sur le réseau (24) en utilisant le protocole de communication vers un premier noeud de réseau (20ₓ, 22ₓ) correspondant connecté au réseau (24) et
- le circuit (56b) étant destiné à transmettre un deuxième ensemble d'un ou plusieurs paquets sur le réseau (24) en utilisant le protocole de communication vers un deuxième noeud de réseau (20ₓ, 22ₓ) correspondant connecté au réseau (24).

11. Procédé de fonctionnement d'un routeur (Rₓ, 18ₓ) pour acheminer des paquets entre une pluralité de noeuds de réseau (20ₓ, 22ₓ) d'un réseau informatique conformément à un protocole de communication, le procédé comprenant les étapes suivantes :
- examen des paquets communiqués au routeur (Rₓ, 18ₓ) ;
- fourniture d'informations associées avec les paquets sélectionnés parmi les ceux examinés et
- communication à un système de gestion (12, 14ₓ) externe en utilisant un protocole de système de gestion de réseau qui est différent du protocole de communication ;
**caractérisé en** plus par
- le traitement des informations fournies en fonction des informations de commande reçues du système de gestion en utilisant le protocole de système de gestion de réseau et
- l'inclusion des informations traitées dans un ou plusieurs paquets et la transmission du ou des plusieurs paquets sur le réseau (24) vers au moins un noeud de réseau (20ₓ, 22ₓ) en utilisant le protocole de communication.
